# EUROPÄISCHE PATENTSCHRIFT

(11) **EP 2 157 243 B1**
(45) Veröffentlichungstag und Bekanntmachung des Hinweises auf die Patenterteilung: **01.04.2015**
(21) Anmeldenummer: 09450151.7
(22) Anmeldetag: 20.08.2009
(51) Int. Cl.: E02B 8/08

(54) **Organismenwanderanlage**
Organism displacing installation
Installation de déplacement d'organismes

(30) Priorität: 22.08.2008 AT 13052008
(43) Veröffentlichungstag der Anmeldung: 24.02.2010
(73) Patentinhaber: Kirchdorfer Fertigteilholding GmbH, 2752 Wöllersdorf (AT)
(72) Erfinder: Helmut, Mader, 3512 Mautern (AT)
(74) Vertreter: Gibler & Poth Patentanwälte OG

(56) Entgegenhaltungen:
- AT-U1- 9 955
- DE-A1-102005 042 476
- DE-U1-202006 005 000
- GB-A- 328 256

## Beschreibung

Die Erfindung betrifft eine Organismenwanderanlage zur Anordnung in einem fließenden Gewässer gemäß dem Oberbegriff des Patentanspruches 1.

Fische und sonstige Wasserorganismen können jährlich, in einem mehrjährigen Zyklus oder im Laufe ihres Lebens Ihren Lebensraum verlagern, wobei diese Organismen über weite Strecken bis hin zu mehreren tausend Kilometern wandern können. Für diese Wanderung ist es jedoch notwendig, dass der Flussverlauf flussaufwärts und flussabwärts als Gewässerkontinuum vorliegt und derart zur Organismenwanderung geeignet ist.

Neben anderen Faktoren wie Schad-, Schmutz- und/oder Nährstoffeinträge sind besonders hydromorphologische Eingriffe - wie die Wasserkraftnutzung und der Schutzwasserbau mit das Gewässerkontinuum unterbrechenden Querbauwerken - Hauptursache für die rapide EU-weite und weltweite Veränderung und Abnahme des jeweiligen einheimischen Organismenbestandes, insbesondere des jeweilig einheimischen Fischbestandes. Die künstlichen Unterbrechungen des Gewässerkontinuums verhindern dabei das Wandern der Organismen, insbesondere der Fische. Damit wird der Lebensraum der Organismen eingeschränkt und die natürliche Wanderung der Organismen wird unterbunden, wobei dies in der Vergangenheit zum regionalen Aussterben bestimmter Organismen führte.

Als Maßnahme zum fortschreitenden Populationsrückgang und/oder Artenrückgang unterschiedlicher Organismen, insbesondere in Europa heimischer Fischarten, wurde die europäische Wasserrahmenrichtlinie erlassen, laut welcher bis 2015 alle europäischen Fließgewässer in einen "guten ökologischen Zustand" bzw. in ein "gutes ökologisches Potenzial" überzuführen sind. Dabei ist unter anderem als zentrale Maßnahme das Gewässerkontinuum dieser Fließgewässer wieder herzustellen.

Dies kann durch Organismenwanderanlagen ermöglicht werden, welche oftmals als Fischwanderhilfen oder Fischaufstiegshilfen bezeichnet werden. Organismenwanderanlagen stellen dabei im Wesentlichen einen Bypass zu einer künstlichen Unterbrechung des Flusses, verursacht beispielsweise durch das Bauwerk einer Staustufe, eines Flusskraftwerkes und/oder einer Schleuse, dar. Mittels der Organismenwanderanlage soll das Vorbeiwandern der Organismen an der künstlichen Unterbrechung gewährleistet werden können.

Eine besondere Gattung der Organismenwanderanlagen stellen dabei die Schlitzpässe dar, welche auch als Schlitzpass-Organismenwanderanlage bezeichnet werden kann. Die Erfindung betrifft dabei insbesondere die Schlitzpass-Organismenwanderanlage, also die Organismenwanderanlagen umfassend Schlitzpässe.

Nachteilig an herkömmlichen Organismenwanderanlagen ist der hohe Wasserbedarf. Insbesondere bei Fluss- und Ausleitungskraftwerken wird durch die Ausbildung herkömmlicher Organismenwanderanlagen die durch das Flusskraftwerk durchfließende Wassermenge reduziert, womit sich die mittels des Flusskraftwerkes erzeugbare Strommenge deutlich reduziert. Dies bewirkt geringere Einnahmen und bewirkt, da dieser Einnahmenverlust der Organismenwanderanlage zuzuschreiben ist, hohe Betriebskosten der Organismenwanderanlage.

Ebenso nachteilig an einer herkömmlichen Organismenwanderanlage ist das Auftreten hoher Fließgeschwindigkeiten und Turbulenzen, wodurch die Funktion der Organismenwanderanlage eingeschränkt wird und schwimmschwache Fischarten nur schwer bzw. gar nicht auf- und abwärts wandern können.

Ebenso nachteilig an einer herkömmlichen Organismenwanderanlage ist die große notwendige Gesamtlänge, womit die durch die Organismenwanderanlage verbaute Fläche, also der Platzbedarf, groß ist und womit der Kapitaleinsatz für den benötigten Grund und Boden sowie für die Bautätigkeit an sich hoch ist.

Die GB 328 256 A beschreibt eine Wanderhilfe für Lachse, wobei die Breite der einzelnen Durchlässe variieren kann.

Die DE 10 2005 042 476 A1 beschreibt eine Fischaufstiegshilfe mit verstellbaren Schlitzen.

Die AT 9 955 U 1 beschreibt eine Fischwanderhilfe mit Durchlässen, Ruheplätzen und künstlicher Verblockung.

Die DE 20 2006 005 000 U1 offenbart ebenfalls eine Fischwanderhilfe mit Trennwänden und wechselseitig angeordneten Durchlässen.

Aufgabe der Erfindung ist es daher eine Organismenwanderanlage der eingangs genannten Art anzugeben, mit welcher die genannten Nachteile vermieden werden können, welche Platz sparend, für alle Fischarten und Fisch-Altersstadien funktionsfähig und Baukosten schonend ausgebildet werden kann, welche bei neu zu errichtenden und bei bestehenden, das Gewässerkontinuum unterbrechenden, Bauwerken zugebaut und Betriebskosten schonend eingesetzt werden kann.

Erfindungsgemäß wird dies durch die Merkmale des Patentanspruches 1 erreicht.

Dadurch ergibt sich der Vorteil, dass der hydraulische Fließverlust am Schlitz hoch ist. Durch den hohen hydraulischen Fließverlust kann die durch die Organismenwanderanlage durchfließende Wassermenge gering ausgebildet sein. Vorteilhaft dabei ist, dass lediglich wenig Wasser an der künstlichen Unterbrechung, insbesondere dem Flusskraftwerk, vorbeifließt, womit der mögliche Wirkungsgrad der künstlichen Unterbrechung, insbesondere des Flusskraftwerkes, weiterhin hoch ist. Dies ermöglicht einen lediglich geringen Einnahmenentgang durch die Organismenwanderanlage. Insbesondere können bei der Ausbildung des Schlitzes mit dieser Schlitzlänge im Schlitz Rauheitselemente, beispielsweise Wandrauheits- und/oder Sohlrauheitselemente, ausgebildet werden, wobei der hydraulische Fließverlust am Schlitz durch eine Verbundwirkung der Rauheitselemente untereinander sowie mit der Schlitzbreite und/oder der Schlitzlänge besonders hoch sein kann.

Ebenso kann pro Schlitz eine größere Höhendifferenz zwischen der zum Schlitz flussaufwärts gerichteten Wasseroberfläche und der zum Schlitz flussabwärts gerichteten Wasseroberfläche ausgebildet sein, ohne dass die Fließgeschwindigkeit eine die Organismenwanderung behindernde hohe Größe erreicht. Vorteilhaft dabei ist, dass die Organismenwanderanlage mit wenigen Schlitzen eine große Wasserspiegelhöhendifferenz zwischen dem Flussoberlauf zum Flussunterlauf überbrücken kann. Dadurch kann die Organismenwanderanlage auf engem Raum ausgebildet werden, welches ermöglicht, dass lediglich eine geringe Grundfläche, insbesondere zusätzlich, zu verbauen ist. Vorteilhaft dabei ist, dass die Grundstückskosten und die Baukosten der erfindungsgemäßen Organismenwanderanlage gering sein können.

Insgesamt ermöglicht die erfindungsgemäße Organismenwanderanlage auch die einfache nachträgliche, also zusätzliche, Installation bei bereits bestehenden künstlichen, das Gewässerkontinuum unterbrechenden, Bauwerken, insbesondere Flusskraftwerken, womit in kostengünstiger und Betriebskosten schonender Weise das Fließgewässer trotz dieser Bauwerke in den "guten ökologischen Zustand" bzw. in das "gute ökologische Potenzial" zurückgeführt werden kann. Der gute ökologische Zustand bzw. das gute ökologische Potenzial bedeutet in diesem Zusammenhang, dass das Gewässerkontinuum für eine dem Artenbestand ausreichende Organismenwanderung aufweist.

Vorteilhaft dabei ist weiters, dass die Oberfläche des Schlitzes hoch ist. Damit können neben hydraulischen Verlusten, insbesondere Aufweitungs- und Einengungsverlusten, auch Reibungsverluste zwischen Wasser und den Schlitzflächen einen erheblichen Beitrag zur Verringerung der Wasserdurchflussmenge beisteuern, wobei dennoch gewährleistet werden kann, dass die Strömung im Schlitz im Wesentlichen laminar ausgebildet ist, sodass dass die Organismenwanderanlage eine besonders hohe Organismenpassierbarkeit aufweist. Die Variation der Schlitzbreite kann dabei durch die Wandrauheitselemente, insbesondere durch Erhöhungen und/oder Vertiefungen, ausgebildet sein, wobei die Wandrauheitselemente an zumindest einer von zwei gegenüberliegenden - den Schlitz begrenzenden - Schlitzflächen ausgebildet sein können. Der Verbundwirkung der einzelnen Wandrauheitselemente mit dem Schlitz über die gesamte Schlitzlänge kommt dabei große Bedeutung zu.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Detail einen Schlitzpass einer Organismenwanderanlage einer vorteilhaften ersten Ausführungsform in Aufsicht;
Fig. 2 die Organismenwanderanlage der ersten Ausführungsform im Schrägriss;
Fig. 3 die Organismenwanderanlage der ersten Ausfiihrungsform in Ansicht von vorne;
Fig. 4 die Organismenwanderanlage gemäß der ersten Ausführungsform in Aufsicht;
Fig. 5 die Organismenwanderanlage gemäß einer vorteilhaften zweiten Ausfiihrungsform im Schrägriss;
Fig. 6 die Organismenwanderanlage gemäß einer dritten Ausführungsform im Schrägriss;
Fig. 7 die Organismenwanderanlage gemäß einer vierten Ausführungsform im Schrägriss;
Fig. 8 einen Teil des Schlitzes mit einer ersten Ausbildung der variierenden Schlitzbreite im Schrägriss;
Fig. 9 den Teil gemäß Fig. 8 in Ansicht von vorne;
Fig. 10 einen Teil des Schlitzes mit einer zweiten Ausbildung der variierenden Schlitzbreite im Schrägriss;
Fig. 11 den Teil gemäß Fig. 10 in Ansicht von vorne;
Fig. 12 einen Teil des Schlitzes mit einer dritten Ausbildung der variierenden Schlitzbreite im Schrägriss;
Fig. 13 den Teil gemäß Fig. 12 in Ansicht von vorne;
Fig. 14 den Schlitz mit einer fünften Ausbildung der variierenden Schlitzbreite im Schrägriss;
Fig. 15 den Schlitz gemäß Fig. 14 in Ansicht von vorne;
Fig. 16 den Schlitz gemäß Fig. 14 in Aufsicht;
Fig. 17 den Schlitz mit einer sechsten Ausbildung der variierenden Schlitzbreite im Schrägriss;
Fig. 18 den Schlitz gemäß Fig. 17 in Ansicht von vorne;
Fig. 19 den Schlitz gemäß Fig. 17 in Aufsicht;
Fig. 20 die Organismenwanderanlage gemäß einer fünften, besonders vorteilhaften, Ausführungsform im Schrägriss; und
Fig. 21 die Organismenwanderanlage gemäß Fig. 20 in Aufsicht.

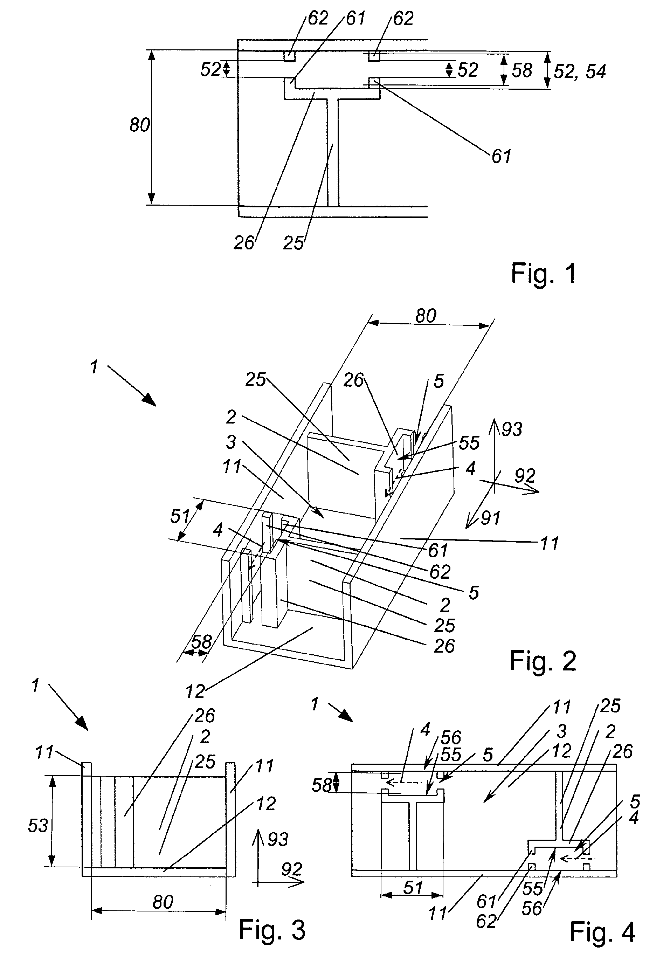

Die Fig. 1 bis 21 zeigen eine Organismenwanderanlage 1 oder Details einer Organismenwanderanlage 1 zur Anordnung in einem fließenden Gewässer, wobei die Organismenwanderanlage 1 mit einer ersten Länge 81, ersten Breite 80 und ersten Höhe ausgebildet ist, wobei die Organismenwanderanlage 1 entlang der ersten Länge 81 wenigstens zwei Schlitzpässe 2 sowie wenigstens ein Becken 3 umfasst, wobei das Becken 3 zwischen jeweils zwei der wenigstens zwei Schlitzpässe 2 ausgebildet ist, und wobei jeder Schlitzpass 2 zum Durchfluss von Wasser in einer Schlitzdurchflussrichtung 4 wenigstens einen von der Organismenwanderanlage 1 umfassten Schlitz 5 ausbildet, bei welcher Organismenwanderanlage 1 zur Platz sparenden, für alle Fischarten und Fisch-Altersstadien funktionsfähig und Baukosten schonenden und Betriebskosten schonenden Ausbildung dieser vorgesehen ist, dass der Schlitz 5 eine - in Schlitzdurchflussrichtung 4 gemessene - Schlitzlänge 51 aufweist, welche Schlitzlänge 51 zwischen 20% und 80% insbesondere 40% bis 75%, bevorzugt 50% bis 70%, der ersten Breite 80 beträgt, und dass der Schlitz 5 eine - normal zur Schlitzdurchflussrichtung 4 gemessene - variierende Schlitzbreite 52 aufweist. Diese Ausbildung ermöglichen einen geringen Wasserdurchfluss bei gleichzeitig guter Passierbarkeit der Organismenwanderanlage 1 für die Organismen. Dadurch kann die Wasserdurchflussmenge durch die Organismenwanderanlage 1 gering ausgebildet sein und/oder die von der Organismenwanderanlage 1 verbaute Grundfläche klein sein. Dadurch können die Herstellkosten und/oder die Betriebskosten der Organismenwanderanlage 1 gering gehalten werden, wobei insbesondere die eingangs genannten Vorteile und vorteilhaften Wirkungen gewährleistet werden können.

Die Organismenwanderanlage 1 dient dabei zur Wiederherstellung eines Gewässerkontinuums eines bestehenden Fließgewässers. Die Erfindung liegt dabei insbesondere auf dem technischen Gebiet der Organismenwanderanlage 1, insbesondere Fischwanderhilfen, bevorzugt Fischaufstiegshilfen oder Fischtreppen, umfassend Schlitzpässe 2, welche im Englischen als "vertical-slot fish ladder" oder "vertical slot fish pass" bezeichnet wird. Üblicherweise sind dabei die in der Organismenwanderanlage 1 ausgebildeten und von der Organismenwanderanlage 1 umfassten Schlitze 5 im Wesentlichen vertikal ausgebildet.

Die Schlitzbreite 52 kann insbesondere horizontal gemessen werden, also in einer horizontalen Ebene gemessen werden.

Da die Schlitzbreite 52 variiert, kann diese an verschiedenen Stellen des Schlitzes 5, also lokal, unterschiedlich sein. In diesem Sinne definiert sich der Schlitz 5 durch eine Mehrzahl tatsächlicher Wert der Schlitzbreite 52 mit jeweilig zugehörigen Positionen dieser Schlitzbreite 52. Diese Schlitzbreite 52 kann als lokale Schlitzbreite 52 bezeichnet werden.

Die Organismenwanderanlage 1 kann bevorzugt kanalförmig ausgebildet sein und kann dazu eine Bodenfläche 12 und zwei Seitenwände 11 umfassen. Die Organismenwanderanlage 1 kann, insbesondere im Wesentlichen, geradlinig zwischen dem Flussoberlauf und dem Flussunterlauf ausgebildet sein. Die erste Länge 81 der Organismenwanderanlage 1 ist dabei insbesondere zu einer ersten Richtung 91 parallel, welche erste Richtung 91 lediglich geringfügig vom Flussgefälle abweicht. Die erste Breite 80 ist dabei die innenseitig an der Organismenwanderanlage 1 gemessene Breite der Organismenwanderanlage 1, insbesondere die Breite zwischen den beiden Seitenwänden 11, und kann insbesondere parallel zu einer auf die erste Richtung 91 normal stehenden zweiten Horizontalen 92 gemessen werden. Die erste Höhe ist die lokale Höhenerstreckung der Organismenwanderanlage 1 und kann insbesondere im Wesentlichen parallel zu einer Vertikalen 93 ausgebildet sein.

Bei den dargestellten Ausführungsformen der Organismenwanderanlage 1 ist der Schlitz 5 im Wesentlichen parallel zur ersten Richtung 91 angeordnet, womit die erste Richtung 91 im Wesentlichen mit der Schlitzdurchflussrichtung 4 zusammenfällt.

Die Organismenwanderanlage 1 kann in Längsrichtung, also entlang der ersten Richtung 91, insbesondere geneigt zu einer horizontalen Ebene ausgebildet sein, womit die Gesamthöhe der Organismenwanderanlage 1 die erste Höhe plus dem Niveauunterschied der Organismenwanderanlage 1 zwischen dem an die Organismenwanderanlage 1 unmittelbar anschließenden Flussoberlauf und dem an die Organismenwanderanlage 1 unmittelbar anschließendem Flussunterlauf ist.

Die Organismenwanderanlage 1 kann in Längsrichtung von der Geradlinigen abweichend ausgebildet sein und kann insbesondere - in Aufsicht auf die Organismenwanderanlage 1 gesehen - gebogen, kreisbogenförmig, gewunden, Zickzack-förmig oder meanderförmig angeordnet sein, wobei die erste Breite 80 entlang der ersten Länge 81 der Organismenwanderanlage 1 im Wesentlichen konstant sein kann. Die ersten Richtung 91 ist dabei selbst nicht geradlinig, sondern folgt vielmehr dem Verlauf der Organismenwanderanlage 1. Hiebei kann die erste Richtung 91 im Wesentlichen gemäß den nächstliegenden Bereichen der Seitenwände 11 orientiert sein.

In diesem Zusammenhang können auch die Schlitze 5 dem Verlauf der Seitenwände 11 der Organismenwanderanlage 1 folgend angeordnet sein, wobei die Schlitzdurchflussrichtung 4 in unterschiedlichen Schlitzen 5 unterschiedlich gerichtet sein kann.

Bei einer weiteren Weiterbildung der Organismenwanderanlage 1 kann die erste Breite 80 variieren, wobei die gegenüberliegenden Seitenwände 11 zumindest bereichsweise nicht parallel, also unparallel, zueinander angeordnet sein können. Derart kann besonders einfach auf die räumlichen Gegebenheiten der Umgebung eingegangen werden. Dabei kann die Organismenwanderanlage 1 in der Ansicht von oben, also in Blickrichtung parallel zur Höhenerstreckung der Organismenwanderanlage 1, auch trogförmig oder trapezförmig ausgebildet sein. Bei variierender erster Breite 80 weist die Organismenwanderanlage 1 einen Durchschnittswert der erste Breite 80 auf, welcher rechnerisch ermittelt werden kann. Wenn die erste Breite 80 variiert, beziehen sich auf die erste Breite 80 bezogene Verhältnisse weiterer Erstreckungen, insbesondere der Schlitzlänge 51, auf diesen Durchschnittswert der ersten Breite 80. Der Durchschnittswert wird gemäß dem arithmetischen Mittelwert errechnet und kann als arithmetischer Mittelwert der ersten Breite 80 bezeichnet werden.

Die Organismenwanderanlage 1 kann Materialien wie Beton, verstärkten Beton, Kunststoff, Metallblech und/oder Holz umfassen. Ebenso ist ein Materialmix mehrerer dieser Materialien möglich, beispielsweise mit Holz beplankte Metallbleche.

Die Organismenwanderanlage 1 kann eine erste Länge 81 zwischen 5m und 500m, eine erste Breite 80 zwischen 0,5m und 10m und eine erste Höhe zwischen 0,4m und 3m aufweisen. Die Organismenwanderanlage 1 kann eine Wasserspiegelhöhendifferenz, also Wasserniveaudifferenz, zwischen dem Flussoberlauf und dem Flussunterlauf üblicherweise zwischen 0,15m und 40m, jedoch auch darüber, überbrücken. Erste Breite 80 und erste Höhe richten sich dabei insbesondere nach den lokal vorhandenen Organismen, insbesondere Fischbeständen, welche selbst unterschiedliche Größen aufweisen und nach welchen die Schlitzbreite 52 und die Beckengrößen zu definieren sind.

Die erfindungsgemäße Organismenwanderanlage 1 macht sich dabei gleichzeitig mehrere unterschiedliche hydraulische Verluste zu Nutze, welche hydraulische Verluste Strömungsverluste, Umlenkverluste, Reibungsverluste, Stoßverluste, Aufweitungsverluste und/oder Einengungsverluste umfassen können. Die hydraulischen Verluste werden durch Umlenkungen, Wandreibungen, Aufweitungen und/oder Einengungen erzielt. Ein Teil der gesamten hydraulischen Verluste geht dabei unmittelbar auf die Wandrauheiten zurück und ein Teil der gesamten hydraulischen Verluste auf die Umlenkungen, Aufweitungen und/oder Einengungen, welche Umlenkungen, Aufweitungen und/oder Einengungen ebenso durch die Ausgestaltung einer ersten Schlitzfläche 55 und/oder einer zweiten Schlitzfläche 56 initiiert sind. Vorteilhaft dabei ist, dass durch Umlenkungen und Aufweitungen hydraulischen Verluste initiiert werden, welche ansonsten wesentlich größere Schlitzflächen 55, 56 benötigen würden. In diesem Sinne kann von initiierter Wandrauheit gesprochen werden, welche initiierter Wandrauheit die tatsächliche Wandrauheit und darüber hinaus die Umlenkungen, Aufweitungen und/oder Einengungen umfasst.

Dadurch kann der Wasserdurchsatz bei zumindest gleich bleibender, zumeist jedoch deutlich verbesserter, Organismenpassierbarkeit, insbesondere Fischpassierbarkeit, gegenüber einer herkömmlichen Fischwanderhilfe vergleichbarer Größe erheblich gesenkt werden, wobei gewährleistet sein kann, dass die zur Organismenpassierbarkeit einzuhaltenden maximalen Fließgeschwindigkeiten und minimalen Wassertiefen eingehalten werden. Vorteilhaft dabei ist, dass auch im Schlitz 5 eine im Wesentlichen laminare Strömung des Wassers gewährleistet werden kann, womit auch schwimmschwache Organismen, insbesondere Fische, jeden der Schlitze 5 gut und zuverlässig sowohl flussaufwärts als auch flussabwärts passieren können. Das Strömungsverhalten bzw. Strömungsfeld in den Schlitzen 5 wird dabei von den initiierten Wandrauheiten dahingehend beeinflusst, dass in Folge der Verbundwirkung der Einzelelemente isolierte Rauheitsströmungen bzw. Wirbelüberlagerungsströmungen entstehen. Der Fließwiderstand wird dabei aus einer Kombination von Reibungsverlusten und Formverlusten optimiert und maximiert. Dabei kann ein sprunghafter Wechsel von einem strömenden Wasserdurchfluss durch den Schlitz 5 zu einem schießenden Wasserdurchfluss durch den Schlitz 5 verhindert werden, welches sich ebenfalls positiv auf die Organismenpassierbarkeit auswirkt.

Vorteilhafterweise kann die Schlitzlänge 51 zwischen 0,4m und 2,5m, insbesondere zwischen 0,8m und 2,2m, bevorzugt zwischen 1,2m und 2,0m, betragen. Vorteilhafterweise kann dabei pro Schlitz 5 eine hohe Niveaudifferenz der Wasseroberfläche überbrückt werden. Derart kann auch eine hohe Niveaudifferenz der Wasseroberfläche vom Flussoberlauf zum Flussunterlauf mit wenigen Schlitzpässen 2 mit geringem Wasserdurchfluss und unter Einhaltung der maximalen Fließgeschwindigkeiten und minimalen Wassertiefen überbrückt werden. Diese Längserstreckungen der Schlitzlänge 51 ermöglichen einen geringen Wasserdurchfluss bei gleichzeitig guter Passierbarkeit der Organismenwanderanlage 1 für die Organismen.

Die Fig. 1 bis 21 zeigen vorteilhafte Ausführungsformen der Organismenwanderanlage 1 und vorteilhafte Ausbildungen der Geometrie der Schlitze 5, wobei der Schlitz 5 eine - im Wesentlichen horizontal und normal zur Schlitzdurchflussrichtung 4 gemessene - variierende Schlitzbreite 52 aufweist.

Insbesondere kann die Schlitzbreite 52 zwischen 5% und 60%, insbesondere zwischen 6% und 55%, bevorzugt zwischen 7% und 50%, der Schlitzlänge 51 variieren. Insbesondere kann die Schlitzbreite 52 zwischen 5% und 45%, insbesondere zwischen 8% und 35%, der ersten Breite 80 variieren. Hiebei kann individuell auf den Vor-Ort bestehenden ökologischen Bedarf und Bestand an Organismen, insbesondere an Fischen, eingegangen werden, wobei diese Verhältnisse der Schlitzbreite 52 zur Schlitzlänge 51 eine überdurchschnittlich gute Passierbarkeit für Organismen bei einem überdurchschnittlich geringen benötigten minimalen Wasserdurchfluss durch die Organismenwanderanlage 1 gewährleisten können. Vorteilhaft dabei ist, dass die Organismenwanderanlage 1 für die Organismen, insbesondere für die Fische, gut passierbar ist und der Wasserdurchfluss durch die Organismenwanderanlage 1 dennoch gering sein kann.

Insbesondere kann vorgesehen sein, dass eine in Richtung der Höhe der Organismenwanderanlage 1 projizierten Schlitzfläche des Schlitzes 5 zwischen 5% und 25%, insbesondere zwischen 10% und 20%, einer in derselben Richtung projizierte Beckenfläche des Beckens 3 beträgt. Insbesondere kann dabei vorgesehen sein, dass das Wasservolumen im Schlitz 5 zwischen 5% und 25%, insbesondere zwischen 10% und 20%, des Wasservolumens im Becken 3 beträgt. Bei diesen Verhältnissen der Flächen bzw. der Volumina zueinander können beim Durchfließen besonders hohe hydraulische Fließverluste entstehen und dennoch eine im Wesentlichen laminare Durchströmung der Organismenwanderanlage 1 gewährleistet werden, womit auch schwimmschwache Organismen, insbesondere Fische, die Organismenwanderanlage 1 zuverlässig passieren können.

Da die Schlitzbreite 52 variiert, kann für den Schlitz 5 ein Mittelwert der Schlitzbreite 52 angegeben werden, welche im Weiteren als Schlitzmittelbreite 58 bezeichnet wird und welche Schlitzmittelbreite 58 in einigen der Fig. eingezeichnet ist. Die Schlitzmittelbreite 58 wird dabei als das Flächenintegral über die variierende Schlitzbreite 52 gebildet. In der Praxis kann die Schlitzmittelbreite 58 mit hinreichender Genauigkeit durch Aufsummieren von Einzelflächen mit jeweiligen Flächenintervallschlitzbreiten dividiert durch die Gesamtfläche der ersten Schlitzfläche 55 oder der zweiten Schlitzfläche 56 bestimmt werden, welches als flächengewichtetes Aufsummieren der einzelnen variierenden, lokalen Schlitzbreiten 52 bezeichnet werden kann. Dies entspricht der Durchschnittsbildung der variierenden Schlitzbreite 52. Die Schlitzmittelbreite 58 ist geringer als die Schlitzmaximalbreite 54 der variierenden Schlitzbreite 52 zwischen der ersten Schlitzfläche 55 und der zweiten Schlitzfläche 56 und größer als die Minimalbreite der variierenden Schlitzbreite 52 zwischen der ersten Schlitzfläche 55 und der zweiten Schlitzfläche 56. Die Minimalbreite und die Schlitzmaximalbreite 54 kann sich insbesondere an den Größen und Eigenschaften der im Gewässer vorkommenden Fische orientieren.

Insbesondere kann vorgesehen sein, dass die Schlitzbreite 52 im Mittel, also die Schlitzmittelbreite 58, zwischen 7% und 50%, insbesondere zwischen 8% und 45%, bevorzugt zwischen 10% und 40%, der Schlitzlänge 51 beträgt.

Insbesondere kann vorgesehen sein, dass die Schlitzmittelbreite 58, zwischen 8% und 40%, insbesondere zwischen 10% und 30% der ersten Breite 80 beträgt.

Insbesondere kann vorgesehen sein, dass die Schlitzmittelbreite 58 mindestens 50%, insbesondere mindestens 70%, bevorzugte mindestens 80%, einer Schlitzmaximalbreite 54 der variierenden Schlitzbreite 52 beträgt.

Vorteilhafterweise kann vorgesehen sein, dass der Schlitz 5, welcher insbesondere durch die erste Schlitzfläche 55 und die der ersten Schlitzfläche 55 gegenüberliegende zweite Schlitzfläche 56 begrenzt sein kann, an eine der beiden Seitenwände 11 angrenzend ausgebildet ist, wobei die zweite Schlitzfläche 56 durch eine der beiden Seitenwände 11 ausgebildet sein kann. Da sich an den Seitenwänden 11 eine die Fließgeschwindigkeit verlangsamende Grenzschicht ausbildet, kann derart die maximale Fließgeschwindigkeit im Schlitz 5 weiter gesenkt werden.

In diesem Zusammenhang - und wie in Fig. 2, 4 und 5 dargestellt - kann insbesondere vorgesehen sein, dass die Schlitze 5 nächstliegend benachbarter Schlitzpässe 2 jeweils abwechselnd an einer der beiden Seitenwände 11 und der anderen der beiden Seitenwände 11 angeordnet sind. Derart kann gewährleistet sein, dass das durch die Organismenwanderanlage 1 durchfließende Wasser nach dem Durchtritt durch einen Schlitz 5 umgelenkt wird, um durch den nächsten Schlitz 5 durchtreten zu können. Dabei treten vorteilhafte Umlenkverluste auf. Diese können besonders durch Anordnung zusätzlicher Umlenkwände im Becken 3 weiter erhöht werden.

In vorteilhafter Weiterbildung können die Schlitzlänge 51 zwischen 0,8m und 2,2m, die variierende Schlitzbreite 52 zwischen 5% und 60% der Schlitzlänge 51.

Die Ausführungen zur variierenden Schlitzbreite 52 können auch auf variierende Schlitzlänge 51 und/oder variierende Schlitzhöhe 53 übertragen werden, wobei die erste Schlitzfläche 55 und/oder die zweite Schlitzfläche 56 in Aufsicht auf jeweils eine dieser Schlitzflächen 55, 56 gesehen abweichend von der rechteckigen Geometrie ausgebildet sein können.

Im Weiteren kann - in Schlitzdurchflussrichtung 4 gesehen und wie diese Sichtrichtung in den Fig. 3, 9, 11, 13, 15, 17 und 20 dargestellt - der Schlitz 5 anstatt im Wesentlichen parallel V-förmig, U-förmig, dachförmig oder X-förmig ausgebildet sein, wobei die erste Schlitzfläche 55 und/oder die zweite Schlitzfläche 56 zumindest bereichsweise nicht parallel, also unparallel, also schief, zueinander sind.

Insbesondere können die erste Schlitzfläche 55 und/oder die zweite Schlitzfläche 56 uneben ausgebildet sein, wie dies bei der zweiten, der dritten, vierten und fünften Ausführungsform der Organismenwanderanlage 1 vorgesehen ist und wie dies in Fig. 1, 2, 4, 5, 6 und 7 dargestellt ist. Dadurch kann der hydraulische Widerstand des Schlitzes 5 gesteigert werden, wobei der Druckverlust in Folge der initiierten Wandrauheiten durch Aufweitungen, Umlenkungen und/oder eine zusätzliche Vergrößerung der den Schlitz begrenzenden Flächen, einer ersten Schlitzfläche 55 und einer zweiten Schlitzfläche 56, in überraschender Weise überdurchschnittlich gesteigert werden kann.

In vorteilhafter Weise hat sich gezeigt, dass sich die hydraulischen Verluste weiter erhöhen, wenn erste Erhöhungen 61 der ersten Schlitzfläche 55 zweiten Erhöhungen 62 der zweiten Schlitzfläche 56 gegenüberliegen, wozu vorgesehen sein kann, dass der Schlitz 5 durch eine erste Schlitzfläche 55 und eine zur ersten Schlitzfläche 55 gegenüberliegende zweite Schlitzfläche 56 begrenzt ist, und dass erste Erhöhungen 61 der ersten Schlitzfläche 55 zweiten Erhöhungen 62 der zweiten Schlitzfläche 56 gegenüberliegen. Dabei können Aufweitungsverlust und Einengungsverluste die Fließgeschwindigkeit des Wassers im Schlitz 5 weiter absenken und/oder es können höhere Niveauunterschiede mittels eines Schlitzes 5 überbrückt werden. In diesem Zusammenhang kann insbesondere vorgesehen sein, dass der Schlitz 5 an einem ersten Ende des Schlitzes 5 lokal eine geringe Schlitzbreite 52, beispielsweise die Minimalbreite, aufweist, die variierende Schlitzbreite 52 im Zentrum des Schlitzes 5 größer ist, insbesondere der Schlitzmaximalbreite 54 entspricht, und an einem zweiten Schlitzende wiederum eine geringe Schlitzbreite 52, beispielsweise die Minimalbreite, aufweist.

Insbesondere wenn der Schlitz 5 genau zwei Engstellen aufweist, können sich hohe hydraulische Verluste einstellen und eine im Wesentlichen laminare Strömung in der Schlitzmitte gewährleistet werden. In vorteilhafter Weiterbildung kann vorgesehen sein, dass die beiden Engstellen des Schlitzes 5 möglichst weit voneinander entfernt angeordnet sind, also - wie bei der vorteilhaften ersten, zweiten und fünften Ausführungsform der Organismenwanderanlage 1 vorgesehen - an den Enden des Schlitzes 5 ausgebildet sind. In vorteilhafter Weiterbildung kann dabei vorgesehen sein, dass die erste Erhöhung 61 und die zweite Erhöhung 62 jeweils rippenförmig ausgebildet sind, wobei der Schlitz 5 in den Bereichen gegenüberliegender Erhöhungen 61, 62 lokal und entlang der gesamten Höhenerstreckung mit konstanter Schlitzbreite 52 ausgebildet ist.

Die zur Wasserverlangsamung wirksame Wandrauheit der ersten Schlitzfläche 55 und der zweiten Schlitzfläche 56 kann in vorteilhafter Weise derart vergrößert werden, dass erste Erhöhungen 61 der ersten Schlitzfläche 55 erhöhungsfreien Bereichen der zweiten Schlitzfläche 56 gegenüberliegen. Vorteilhafterweise sind die Erhöhungen dabei im Wesentlichen vertikal ausgerichtet und stehen dabei im Wesentlichen normal auf die Schlitzdurchflussrichtung 4. Da die variierende Schlitzbreite 52 in erhöhungsfreien Bereichen, also lokal, größerer als die Schlitzmittelbreite 58 ist, können die erhöhungsfreien Bereiche auch als Vertiefungen bezeichnet werden.

Die Erhöhungen 61, 62 können die Wandrauheit erhöhen und können als Wandrauheitselemente bezeichnet werden, wobei der durch die Erhöhungen 61, 62 erzielbare zusätzliche Fließverlust vorbestimmbar sein kann.

Die Erhöhungen 61, 62, also die ersten Erhöhungen 61 und/oder die zweiten Erhöhungen 62, können insbesondere rippenförmig als sich im Wesentlichen über die gesamte erste Höhe 53 erstreckende Rippen ausgebildet sein, wie dies in der ersten, der zweiten und der dritten Ausführungsform der Organismenwanderanlage 1 vorgesehen ist. Die Rippen sind dazu im Wesentlichen vertikal ausgerichtet und stehen derart im Wesentlichen normal auf die Schlitzdurchflussrichtung 4, womit die Umlenkungsverlust, die Einengungsverluste und/oder die Aufweitungsverluste im Sinne der Erfindung besonders hoch sein können.

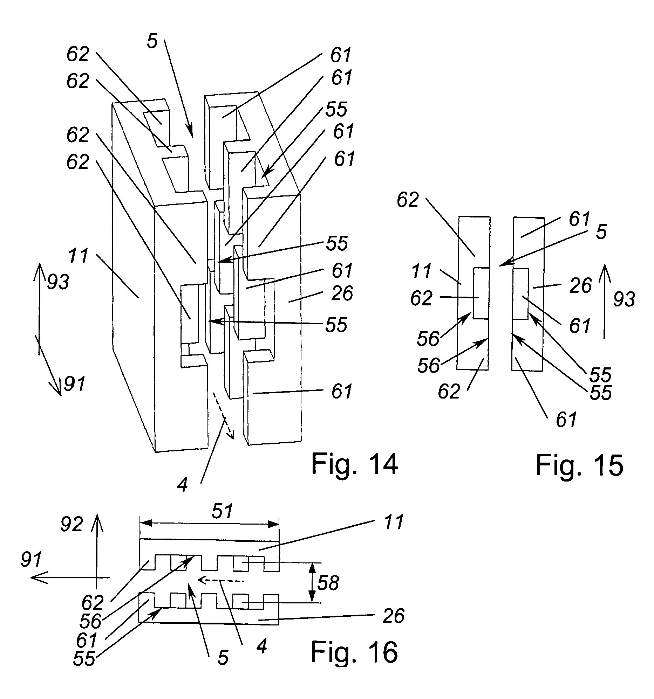

Die Erhöhungen 61, 62 können auch zinnenförmig ausgebildet sein, wie dies bei der vierten Ausführungsform der Organismenwanderanlage 1 vorgesehen ist. Die zinnenförmigen Erhöhungen 61, 62 stellen dabei im Wesentlichen unterbrochene vertikale Rippen dar. Vorteilhaft dabei ist, dass zusätzlich vertikale Strömungsanteile und zusätzliche Strömungswirbel im Bereich des Schlitzes 5 auftreten können, wodurch der Wasserdurchsatz durch den Schlitz 5 durch eine weitere Erhöhung der Wandrauheit bei zumindest gleich bleibend guter Organismenpassierbarkeit weiter minimiert werden kann. Eine fünfte Ausbildung des Schlitzes 5 ist im Detail in Fig. 14, 15 und 16 dargestellt, wobei - in Schlitzdurchflussrichtung 4 gesehen - am unteren Schlitzbereich drei hintereinander liegende Einengungen vorgesehen sind, in der vertikalen Schlitzmitte zwei hintereinander liegende Einengungen vorgesehen sind und am oberen Schlitzbereich wiederum drei hintereinander liegende Einengungen vorgesehen sind. Dieser Schlitz 5 weist eine Schlitzlänge 51, eine variierende Schlitzbreite 52 mit einer entsprechenden Schlitzmittelbreite 58 und eine Schlitzhöhe 53 auf.

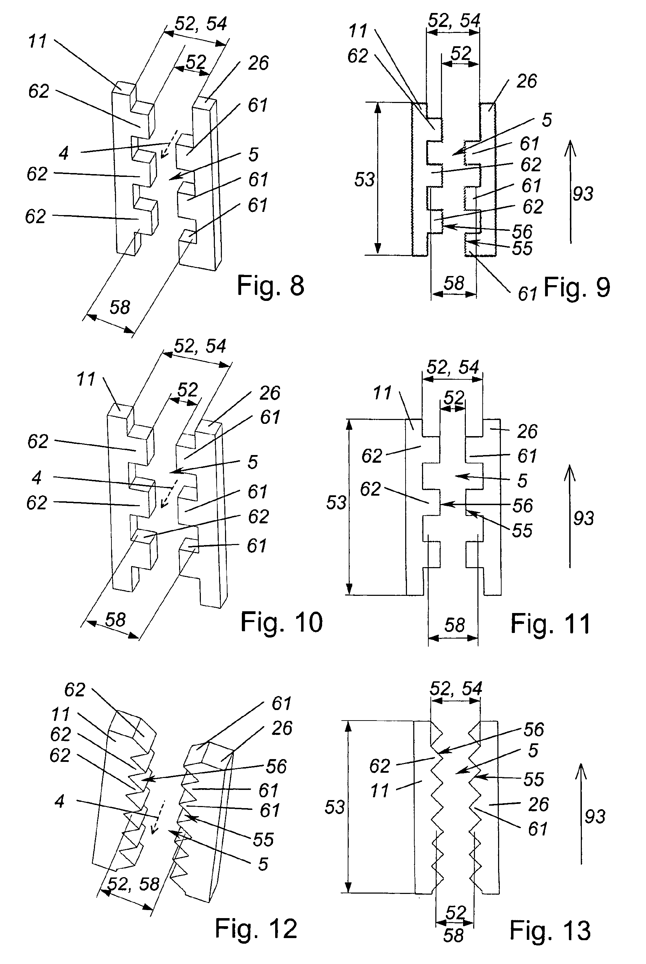

In den Fig. 8 bis 15 und 19 bis 21 sind weitere Details von Schlitzen 5 und weitere Anordnungsbeispiele von Erhöhungen 61, 62 der Schlitze 5 dargestellt.

Fig. 8 bis 11 zeigen als erste und zweite Ausbildung der Erhöhungen 61, 62 zwei unterschiedliche Anordnungen von Zinnen, welche im Wesentlichen entlang der Vertikalen angeordnet sind. Die ersten Erhöhungen 61 können dabei den zweiten Erhöhungen 62 - wie in Fig. 10 und 11 dargestellt - gegenüberliegen. Bei einer anderen Anordnung können die ersten Erhöhungen 61 dabei erhöhungsfreien Bereichen der zweiten Schlitzfläche 56 - wie in Fig. 8 und 9 dargestellt - gegenüberliegen.

Fig. 12 uns 13 zeigen, als Darstellung einer dritten Ausbildung der Erhöhungen 61, 62, entlang der Schlitzhöhe 53 ausgebildete sägezahnförmige Erhöhungen.

In einer - nicht dargestellten - vierten vorteilhaften Ausbildung der Erhöhungen 61, 62, können diese entlang der Schlitzhöhe 53 wellenförmige ausgebildet sein. Wellenförmige Erhöhungen 61, 62 wirken natürlich und gewährleisten eine geringere Verletzungsgefahr von Organismen, wenn diese den Schlitz 5 passieren, also durch den Schlitz 5 schwimmen.

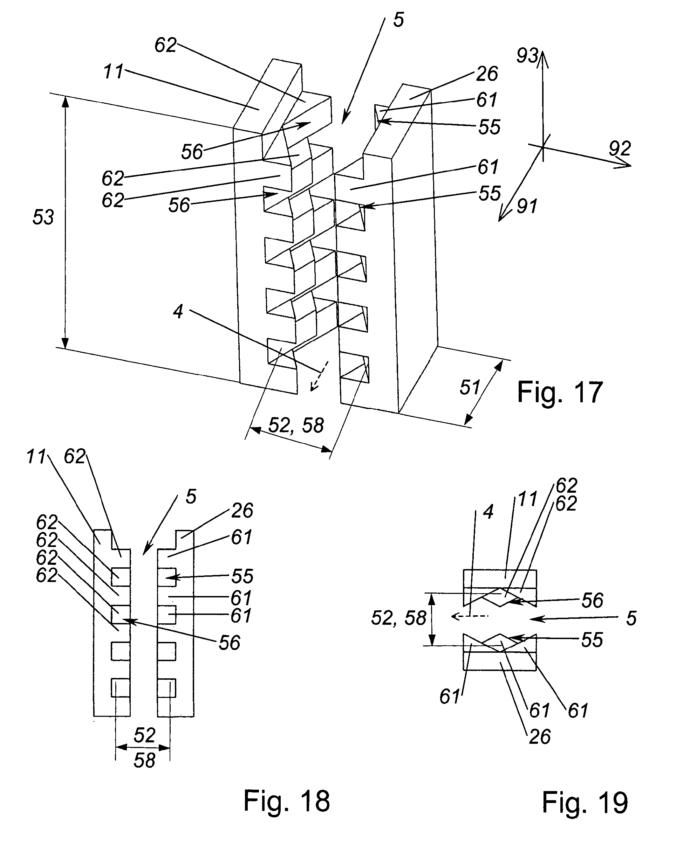

Eine sechste Ausbildung der variierenden Schlitzbreite 52 ist im Schrägriss, in Ansicht von vorne und in Aufsicht in Fig. 17 bis 19 dargestellt. Bei dieser Ausbildung sind in Schlitzdurchflussrichtung 4 keilförmige erste Erhöhungen 61 und in Schlitzdurchflussrichtung 4 keilförmige zweite Erhöhungen 62 angeordnet. Die ersten Erhöhungen 61 können den zweiten Erhöhungen 62 gegenüberliegen, womit sich abwechselnd Einengungen und Aufweitungen im Schlitz 5 ausbilden und wobei Aufweitungsverluste und Einengungsverluste im Schlitz 5 auftreten und wobei die vergrößerte Oberfläche der ersten Schlitzfläche 55 und der zweiten Schlitzfläche 56 für hohe Wandrauheiten im Schlitz 5 sorgt.

Die ersten Erhöhungen 61 und/oder zweiten Erhöhungen 62 können neben rippenförmig, zinnenförmig, wellenförmig und/oder keilförmig auch pyramidenstumpfförmig ausgebildet sind. Bei der pyramidenstumpfförmigen Ausbildung der ersten Erhöhungen 61 und/oder der zweiten Erhöhungen 62 können Reibungsverluste, Einengungsverlust, Aufweitungsverluste und Umlenkverluste zur Erhöhung der hydraulischen Fließverluste verwendet werden und die Durchflussgeschwindigkeit des Schlitzes 5 kann bei gleicher Schlitzlänge 51 und Schlitzhöhe 53 gering sein.

Bei vorteilhaften Ausbildungen der Erhöhungen 61, 62 können diese derart angeordnet sein, dass - in Aufsicht auf die Organismenwanderanlage 1 gesehen - die variierende Schlitzbreite 52 entlang der Schlitzlänge 51 zuerst mit einer flussoberlaufseitigen zweiten Breite, anschließend mit einer - insbesondere schlitzmittigen - dritten Breite und schließlich mit einer flussunterlauflaufseitigen vierten Breite ausgebildet ist, und dass die dritte Breite größer sowohl als die zweite Breite und als die vierte Breite ausgebildet ist. Dabei ist die dritte Breite größer als die Schlitzmittelbreite 58 und die zweite und vierte Breite kleiner als die Schlitzmittelbreite 58.

Insbesondere kann vorgesehen sein, dass der die zweite Breite aufweisende Bereich des Schlitzes 5 und der die vierte Breite aufweisende Bereich des Schlitzes 5 wenigstens 0,45m zueinander beabstandet sind, insbesondere zumindest das 1,2fache der Länge des längsten Organismus, insbesondere Fisches, welcher die Organismenwanderanlage 1 passieren soll. Vorteilhaft dabei ist, dass der Organismus, insbesondere der Fisch, beim Passieren des Schlitzpasses 2 sich im Wesentlichen ständig in laminar fließendem Wasser bewegen kann.

Zweite und vierte Breite stellen dabei Breiten zwischen zwei einander gegenüberliegenden Erhöhungen 61, 62, also die minimale Schlitzbreite 52 an den Stellen von Einengungen im Schlitz 5, dar und die dritte Breite entspricht der Schlitzmaximalbreite 54. Diese Anordnung der Erhöhungen 61, 62 ist in Fig. 1, 2, 4, 5, 6, 7, 16, 18, 19 und 21 dargestellt und bei den diesen vorteilhaften oder bevorzugten Ausführungsformen der Organismenwanderanlage 1 bzw. bei diesen Ausbildungen der variierenden Schlitzbreite 52 vorgesehen. In vorteilhafter Weise kann die Fließgeschwindigkeit in den dabei entstehenden Aufweitungen im Schlitz 5 lokal unter 0,7m/s ausgebildet sein.

In diesem Zusammenhang kann vorgesehen sein, dass die zweite Breite und die vierte Breite in etwa gleich ausgebildet sind. In diesem Zusammenhang kann ebenso vorgesehen sein, dass die dritte Breite dem Doppelten bis dem Dreifachen der zweiten Breite und/oder der vierten Breite entspricht.

Besonders können in diesem Zusammenhang hier die in Fig. 1 bis 5 dargestellten Ausführungsbeispiele der Organismenwanderanlage 1 hervorgehoben werden. Durchflusseingangsseitig bilden gegenüberliegende erste Rippen eine erste Einengung im Schlitz 5 aus, wobei zwischen den Rippen die zweite Breite als Minimale der variierenden Schlitzbreite 52 gemessen wird. Anschließend folgt im Mittelteil des Schlitzes 5 die Maximale der variierenden Schlitzbreite 52. In diesem Mittelteil des Schlitzes 5 kann die Strömungsgeschwindigkeit lediglich zwischen 50% und 20% der Strömungsgeschwindigkeit in der ersten Einengung betragen, womit Aufweitungsverluste zur Energiedissipation und zur Strömungsverlangsamung verwendet werden können. Am strömungsabwärts orientierten Ende des Schlitzes 5 ist mittels zweiter einander gegenüberliegender Rippen eine zweite Einengung ausgebildet, womit nachmalig Einengungsverluste, Umlenkungsverluste und hohe Reibungsverluste auftreten. Die Rippen an der ersten Schlitzfläche 55 und der zweiten Schlitzfläche 56 an deren strömungsoberen Ende und strömungsunteren Ende stellen dabei auch strömungsungünstige Körper dar, womit zusätzlich Umlenkverluste und Wirbelverluste auftreten. Insgesamt ergibt sich über die Verbundwirkung der einzelnen Rauheitselemente in Abhängigkeit von Längsabstand und absoluter geometrischer Rauheit der Einzelelemente die Ausbildung einer isolierten Rauheitsströmung bzw. einer Wirbelüberlagerungsströmung. Vorteilhafterweise ermöglicht diese Ausbildung des Schlitzes 5 auch bei unterschiedlichen Pegelständen ähnliche Strömungsgeschwindigkeiten im Schlitz 5, womit die erfindungsgemäße Organismenwanderanlage 1 auch bei variierenden Wasserständen eine hohe Organismenpassierbarkeit gewährleisten kann.

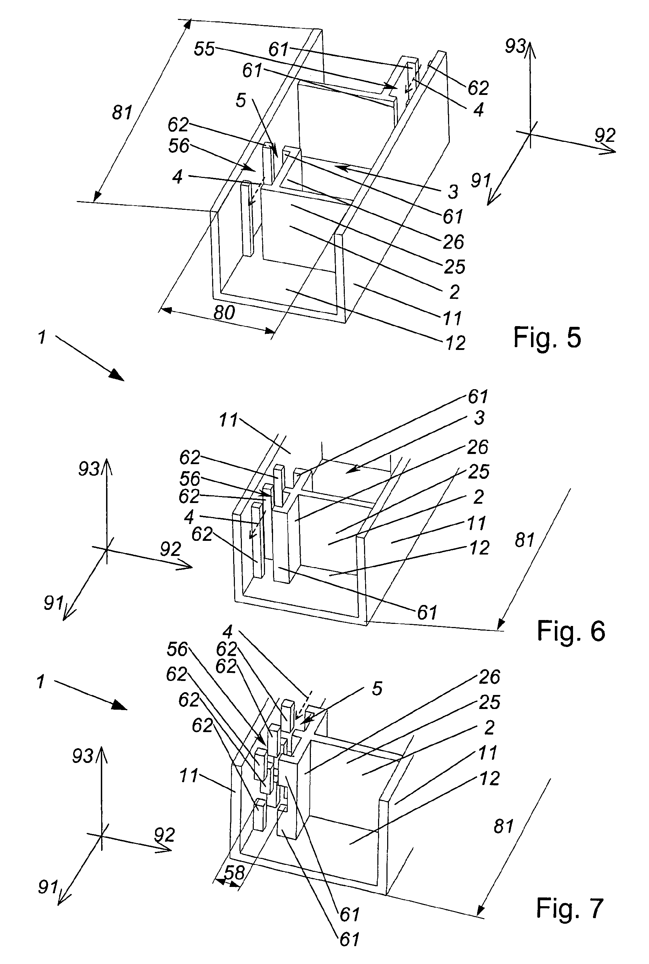

Die in Fig. 6 dargestellte Ausführungsform zeigt Teile einer Organismenwanderanlage 1, bei welcher in Schlitzdurchflussrichtung 4 mittels drei sich parallel zur Schlitzhöhe 53 erstreckender, jeweils gegenüberliegender, Rippenpaare drei Einengungen ausgebildet sind. Diese Ausbildung des Schlitzes 5 ermöglicht zusätzliche Wandrauheiten und kann somit den Wasserdurchfluss durch den Schlitz weiter minimieren. Drei oder mehr aufeinander folgende Einengungen je Schlitz 5 können insbesondere bei Schlitzlängen 51 von über 1m vorgesehen sein.

In vorteilhafter Weise können als Rippen oder Zinnen ausgebildete Erhöhungen 61, 62 zusätzlich mit einer die Reibung erhöhenden Oberfläche ausgebildet sein. Dazu können die Rippen selbst mit rauer, sägezahnförmiger, keilförmiger, stufenförmiger und/oder wellenförmiger zum Wasser gerichteter Oberfläche ausgebildet sein, wobei die mittlere Rauigkeit der die Reibung erhöhenden Oberfläche insbesondere im Bereich von 0,1cm bis 2cm liegen kann. Dabei können Wechselsprünge zwischen strömendem und schießendem Schlitzdurchfluss in besonders vorteilhafter Weise vermieden werden, welches sich ebenso positiv auf die Organismenpassierbarkeit auswirkt.

Besonders bevorzugt kann vorgesehen sein, dass - in Aufsicht auf die Organismenwanderanlage 1 gesehen - der Schlitzpass 2 eine die Becken 3 trennende Beckentrennwand 25 und eine die Schlitzlänge 51 ausbildende Schlitzwand 26 umfasst, wobei die Beckentrennwand 25 und die Schlitzwand 26 wasserundurchlässig miteinander verbunden sind, und dass - in Aufsicht auf die Organismenwanderanlage 1 gesehen - die Schlitzwand 26 im Wesentlichen parallel zur Schlitzdurchflussrichtung 4 ausgebildet ist. Dies ist beispielsweise bei der ersten bis fünften Ausführungsform der Organismenwanderanlage 1 vorgesehen. Die ermöglicht die einfache und kostengünstige Ausbildung der Schlitzpässe 2 mit langen Schlitzen 5 mit der Schlitzlänge 51. Insbesondere kann die Schlitzwand 26 im Wesentlichen parallel zur nächstliegenden Seitenwand 11 der Organismenwanderanlage 1 ausgebildet sein, wodurch die Schlitzdurchflussrichtung 4 parallel zur nächstliegenden Seitenwand 11 ausgebildet sein kann. Grenzflächenströmungsbedingte Seitenwandströmungsverluste können dabei zur Durchflussminimierung genutzt werden.

In vorteilhafter Weise ist bei der ersten bis fünften Ausführungsform der Organismenwanderanlage 1 ebenso vorgesehen, dass - in Aufsicht auf die Organismenwanderanlage 1 gesehen - die Beckentrennwand 25 des Schlitzpasses 2 und die Schlitzwand 26 desselben Schlitzpasses 2 im Wesentlichen rechtwinkelig zueinander angeordnet sind. Vorteilhaft dabei ist, dass das durch die Organismenwanderanlage 1 hindurch fließende Wasser auch im Bereich des Beckens 3 zumindest zweimal umgelenkt wird, wobei die Strömung verlangsamende Umlenkverluste auftreten. Durch die Anordnung der zusätzlicher Umleitwände im Becken 3, insbesondere in einem vorbestimmbaren Winkel und in vorbestimmbarer Länge der Umleitwände, kann dieser Effekt weiter gesteigert werden.

Die Beckentrennwand 25 kann im Wesentlichen rechtwinkelig zur Schlitzdurchflussrichtung 4 ausgebildet sein. Dabei kann insbesondere die Schlitzlänge 51 größer als die in Schlitzdurchflussrichtung 4 gemessene Wandstärke der Beckentrennwand 25 sein. Da der Schlitz 5 dabei, insbesondere wesentlich, länger als die Wandstärke der Beckentrennwand 25 ist, kann der Schlitz 5 auch als Langschlitz bezeichnet werden.

Dabei kann die Schlitzwand 26 in Schlitzdurchflussrichtung 4 und insbesondere in erster Richtung 91 über die Beckentrennwand 25 hinaus stehen, womit sich im Becken 3 zusätzliche Umlenkungseffekte und Ruhezonen für auf- und absteigende Organismen ergeben. Beispielsweise kann bei entsprechender Ausbildung der Schlitzwände 26 und eventueller Leitwände das Wasser s-förmig durch das Becken 3 durchgeleitet werden, wobei das Becken 3 selbst teilweise durch die Seitenwände 11, teilweise durch die Schlitzwände 26, teilweise durch die Beckentrennwände 25 und teilweise durch die Leitwände ausgebildet ist.

In vorteilhafter Weiterbildung kann die der ersten Schlitzfläche 55 gegenüberliegende beckenseitige Oberfläche der Schlitzwand 26 weitere Erhöhungen gemäß den ersten Erhöhungen 61 und/oder zweiten Erhöhungen 62 aufweisen. Dies ermöglicht die Ausbildung von weiteren hydraulischen Verlusten, beispielsweise Umlenkverlusten, Reibungsverlusten, Aufweitungsverlusten oder Einengungsverlusten im Becken 3. Vorteilhafterweise können die weiteren Erhöhungen größer als die ersten Erhöhungen 61 und/oder zweiten Erhöhungen 62 ausgebildet sein und können beispielsweise derart groß ausgebildet sein, dass sich Organismen in erhöhungsfreien Bereichen zwischen nächstliegend benachbarten weiteren Erhöhungen zurückziehen und/oder verstecken können. Derart kann verhindert werden, dass sich in der Organismenwanderanlage 1 befindliche Organismen, insbesondere Fische, für Raubtiere, insbesondere Raubvögel, zu einer leichten Beute werden.

In vorteilhafter Weise kann die Schlitzwand 26 - in Aufsicht gesehen - selbst Zickzack-förmig, sägezahnförmig oder wellenförmig ausgebildet sein, womit bei im Wesentlichen gleich bleibender Wandstärke sowohl die ersten Erhöhungen 61 an der ersten Schlitzfläche 55 als auch die weiteren Erhöhungen an der Beckenfläche der Schlitzwand 26 ausgebildet werden können. Dabei kann der erforderliche Materialaufwand zur Ausbildung der derartigen Schlitzwand 26 gering sein.

In vorteilhafter Weise kann vorgesehen sein, dass - in Aufsicht auf die Organismenwanderanlage 1 gesehen - die Schlitzwand 26 des Schlitzpasses 2 im Wesentlichen lediglich schlitzdurchflussrichtungsaufwärts zur Beckentrennwand 25 desselben Schlitzpasses 2 angeordnet ist, wie dies in Fig. 5, 20 und 21 dargestellt ist. Diese Anordnung ermöglicht ein großes effektiv vom Organismus nutzbares Beckenvolumen. Vorteilhaft dabei ist ebenso, dass das von flussaufwärts einströmende Wasser bis zur flussabwärts gelegenen Beckentrennwand 25 fließt und zum Weiterfließen durch den darauf folgenden Schlitzpass 2 wieder ein Stück "aufwärts", im dargestellten Beispiel also entgegen der ersten Richtung 91, fließen muss, womit ein starke Umlenkung des Wassers innerhalb des Beckens 3 gewährleistet ist, wobei sich eine kreisförmige Strömung im Becken 3 ausbilden kann. Dabei können auch im Becken 3 vergleichsweise hohe hydraulische Verluste auftreten, wobei die Strömung im Becken 3 kreisförmig ausgebildet sein kann und der Organismus im Zentrum des Beckens 3 kaum Energie zum ortsfesten Verbleib aufzuwenden hat. Trotz hoher Strömungsverluste im Becken 3 kann der Organismus dabei im Becken 3 Kräfte schonend verweilen.

Bei einer anderem vorteilhaften Anordnung der Schlitzwand 26 kann vorgesehen sein, dass - in Aufsicht auf die Organismenwanderanlage 1 gesehen - die Schlitzwand 26 des Schlitzpasses 2 im Wesentlichen zu gleichen Teilen sowohl schlitzdurchflussrichtungsaufwärts als auch schlitzdurchflussrichtungsabwärts zur Beckentrennwand 25 desselben Schlitzpasses 2 angeordnet ist, wie dies beispielsweise bei der ersten Ausführungsform der Organismenwanderanlage 1 vorgesehen ist. Dies kann insbesondere bei Schlitzpässen 2 mit einer Schlitzlänge 51, welche Schlitzlänge 51 zwischen 50% und 80% der ersten Breite 80 beträgt, zu stark s-förmig ausgebildeten Strömung im Becken 3 und zu entsprechend hohen Umlenkungs- und Reibungsverlusten an den Beckenwänden führt.

Das oder die Becken 3 dienen den Organismen als Ruhezonen zwischen zwei Schlitzpässen 2. Um den Organismen, insbesondere den Fischen, ausreichend Raum zum Ruhen zu geben, kann - in Aufsicht auf die Organismenwanderanlage 1 gesehen - das Becken 3 insbesondere im Wesentlichen L-förmig oder im Wesentlichen rechteckig ausgebildet sein, wobei das Becken 3 eine - in Richtung der ersten Länge 81 gemessene - Beckenlänge und eine - in Richtung der ersten Breite 80 gemessene - Beckenbreite aufweist, und wobei die Beckenlänge zwischen 75% und 300% der Beckenbreite beträgt. Die maximale Beckenbreite kann in vorteilhafter Weise gleich der ersten Breite 80 ausgebildet sein, wie dies bei den beispielhaften Ausführungsformen der Organismenwanderanlage 1 vorgesehen ist. Die im Wesentlichen rechteckige Ausbildung des Beckens 3 ist bei den beispielhaft dargestellten Ausführungsformen der Organismenwanderanlage 1 vorgesehen.

Insbesondere kann vorgesehen sein, dass - in Aufsicht auf die Organismenwanderanlage 1 gesehen - das Becken 3 im Wesentlichen L-förmig ausgebildet ist, wobei das Becken 3 eine - in Richtung der ersten Länge 81 gemessene - variierende Beckenlänge und eine - in Richtung der ersten Breite 80 gemessene - variierende Beckenbreite aufweist. Hiebei kann insbesondere vorgesehen sein, dass die maximale Beckenlänge zwischen 75% und 200% der maximalen Beckenbreite beträgt.

In vorteilhafter Weiterbildung kann im Bereich der Bodenfläche 12, welche als eine Flusssohle im Bereich der Organismenwanderanlage 1 ausbildet, eine strömungsverringernde Struktur ausgebildet sein, welche durch Bodenbewuchs, durch aufragende Steine und/oder durch rippenförmige, zinnenförmige, sägezahnförmige und/oder wellenförmige Erhöhungen ausgebildet sein kann. Auch diese Bereiche dienen den Organismen, insbesondere den Fischen, als Rückzugsbereiche und bilden besonders strömungsberuhigte Bereiche in der Organismenwanderanlage 1 aus.

Durch die vorstehend genannten Maßnahmen, insbesondere die Kombination der Erhöhungen 61, 62, der große Schlitzlänge 51, der Anordnung der Schlitzwand 26 und der Leitwand in der Organismenwanderanlagen 1, kann der Wasserdurchfluss gegenüber herkömmlichen Organismenwanderanlagen 1 in Schlitzpassbauweise bei gleichem Raumbedarf bzw. Grundflächenbedarf und bei zumindest gleich bleibend guter Organismenpassierbarkeit, insbesondere sowohl flussaufwärts als auch flussabwärts, erheblich verringert werden. Ebenso ermöglichen diese Maßnahmen, insbesondere die Kombination der Erhöhungen 61, 62 und der Anordnung des Schlitzes 5, insbesondere der Anordnung der Schlitzwand 26 und der Leitwand, dass die Organismenwanderanlage 1 Platz sparend, für alle Fischarten und Fisch-Altersstadien funktionsfähig und kostengünstig ausgebildet werden kann. Dies kann die Ausbildung einer Organismenwanderanlage 1 auch an Stellen ermöglichen, an welchen aufgrund des benötigten Grundflächenbedarfs keine herkömmlichen Organismenwanderanlagen 1 ausgebildet werden können.

Insbesondere das gleichzeitige Ausnützen mehrerer hydraulischer Verluste hat dabei in überraschender Weise gezeigt, dass die Organismenpassierbarkeit der erfindungsgemäßen Organismenwanderanlage 1 auch bei geringem Wasserdurchsatz gegeben ist, wobei an einzelnen Stellen der Schlitzpässe 2 begrenzt lokal durchaus auch hohe Strömungsgeschwindigkeiten auftreten können, sofern an anderer Stelle im selbigen Schlitzpass 2 eine geringe Strömungsgeschwindigkeit auftritt und wenn im Schlitzpass 2 mittels Aufweitungen für bereichsweise verringerte Strömungsgeschwindigkeit gesorgt wird. Derart können die Strömungsverluste in den Schlitzen 5 der Schlitzpässe als Folge der Verbundwirkung der Wandrauheitselemente besonders hoch sein. Dies ermöglich geringen Einnahmenentgang durch am Wasserkraftwerk vorbei fließendes Wasser und indirekt damit geringe Betriebskosten der Organismenwanderanlage 1.

Die Organismenwanderanlage 1 kann in vorteilhafter Weise als Baukastensystem ausgebildet sein. Derart kann die Organismenwanderanlage 1 einfach und schnell Vorort aufgebaut werden, wobei die Organismenwanderanlage 1 mehrere innerhalb des Baukastensystems standardisierte Einzelbauteile umfasst, welche nach den lokalen Gegebenheiten ausgewählt und zusammengebaut werden können. Die lokalen Gegebenheiten können dabei durch das für Organismen zu umgehende Bauwerk, also die zu umgehende künstliche Unterbrechungen des Gewässerkontinuums, den lokalen Organismenbestand, die für die Organismenwanderanlage 1 verfügbare Grundfläche und durch die Niveaudifferenz der stromaufwärts gegebenen Wasseroberfläche zur stromabwärts gegebenen Wasseroberfläche vorgegeben sein. Durch die zahlreichen Einflussmöglichkeiten auf die Ausbildung der Organismenwanderanlage 1 aufgrund variierender Schlitzbreiten 52, großer Schlitzlängen 51 sowie der Ausgestaltung der ersten und/oder zweiten Erhöhungen 61, 62 kann in besonders einfacher, kostengünstiger und/oder Art und Weise auf die lokalen Gegebenheiten bei hoher Organismenpassierbarkeit Rücksicht genommen werden.

Auch bestehende Organismenwanderanlagen, wie z. B. herkömmliche Vertical-Slot-Fischpässe, können in vorteilhafter Weise mit Einzelteilen des Baukastensystems, insbesondere mit den in dieser Erfindung beschriebenen Schlitzwänden und Geometrien, adaptiert werden.

Als besonderer Vorteil ergibt sich bei Ausbildung der Schlitzlänge 51 zwischen 20% und 80%, insbesondere zwischen 40% und 80%, der ersten Breite 80 bei gleichzeitig variierenden Schlitzbreiten 52, dass die Strömungsgeschwindigkeiten in den Schlitzen 5 bei Hochwasser und bei Niedrigwasser gegenüber herkömmlichen Organismenwanderanlagen 1 weniger stark variieren. Die erfindungsgemäße Organismenwanderanlage 1 ist dabei insbesondere auch an fließenden Gewässern mit variierenden Pegelständen besonders geeignet, eine vollständige Organismenpassierbarkeit vorkommender Arten und Altersstadien zu ermöglichen.

Durch die zahlreichen Einflussmöglichkeiten auf die Ausbildung der Organismenwanderanlage 1 aufgrund variierender Schlitzbreiten 52, großer Schlitzlängen 51 sowie der Ausgestaltung der ersten und/oder zweiten Erhöhungen 61, 62 können unterschiedliche natürliche Biotope nachgebildet werden, wobei sowohl Flussregionen als Rhithral oder als Potamal einfach und kostengünstig nachgebildet werden können, wodurch lokal angepasste Organismenpassierbarkeit gewährleistet sein kann.

In vorteilhafter Weiterbildung kann vorgesehen sein, dass - in Schlitzdurchflussrichtung 4 gesehen - wenigstens einem der Schlitzpässe 2 unmittelbar angrenzend ein Wassereinleitbereich 7 zum kontrollierten Wassereinleiten des fließenden Wassers in den Schlitz vorgeschaltet ist, und dass der Wassereinleitbereich 7 - ebenfalls in Schlitzdurchflussrichtung 4 gesehen - eine sich im Wesentlichen kontinuierlich verringernde Breite aufweist. Der Wassereinleitbereich 7 kann dabei eine Wasserberuhigung gewährleisten und kann insbesondere zuverlässig gewährleisten, dass der Schlitz 5 im Wesentlichen laminar durchströmt wird.

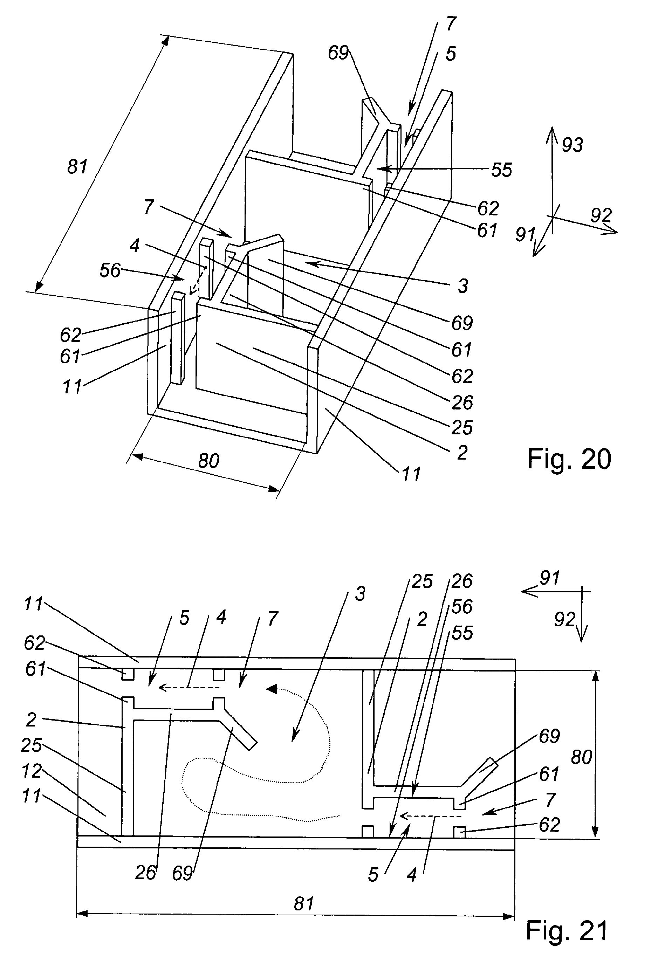

Hiezu kann insbesondere eine Einleitwand vom - in Schlitzdurchflussrichtung 4 gesehen - stromaufwärts gerichteten Ende des Schlitzes 5 abragen, womit der Wassereinleitbereich 7 wenigstens zu einer Seite hin durch eine Einleitwand 69 begrenzt sein kann, wie dies in Fig. 20 und 21 dargestellt ist. Die in Fig. 20 und 21 dargestellte fünfte Ausführungsform der Organismenwanderanlage 1 kann bis auf die zusätzlichen Einleitwände 69 somit der zweiten Ausführungsform der Organismenwanderanlage 1 entsprechen.

Insbesondere kann vorgesehen sein, dass die Einleitwand 69 vom Ende des Schlitzes 5 - in Aufsicht auf die Organismenwanderanlage 1 gesehen - im Wesentlichen in Richtung des Zentrums des Beckens 3 gerichtet ist, insbesondere ins Zentrum des Beckens 3 hineinragt.

Durch die Einleitwand 69, welche entgegen der Schlitzdurchflussrichtung 4 in das Becken 3 hineinragt, kann der Wasserfluss im Becken 3 weiter beruhigt werden, wobei sich im Becken 3 ein Gegenströmbereich 33 ausbilden kann. In diesem Gegenströmbereich 33 kann im Betrieb der Organismenwanderanlage 1 Wasser sowohl im Wesentlichen in Schlitzdurchflussrichtung 4 also auch im Wesentlichen entgegen der Schlitzdurchflussrichtung 4 fließen. Die Strömungsrichtung des Wassers ist schematisch durch einen strichpunktierten Pfeil in Fig. 21 dargestellt. Vorteilhaft dabei ist, dass im Gegenströmbereich 33 zusätzliche hydraulische Fließwiderstände auftreten.

Weiterer Vorteil des derart ausgebildeten Gegenströmbereichs 33 ist, dass das Wasser im Gegenströmbereich 33 - in Summe betrachtet - keine gleichgerichtete Bewegung aufweist und Organismen in diesem Bereich daher ohne Ankämpfen gegen eine gerichtete Strömung in diesem Gegenströmbereich 33 verweilen können. Dieser Vorteil kann dabei insbesondere auch unabhängig von der Wasserdurchflussmenge durch die Organismenwanderanlage 1 ausgebildet sein, womit die Organismenwanderanlage 1 auch bei stark unterschiedlichen Wasserpegeln des Fließgewässers für die Organismen einfach und Kraft schonend passierbar sein kann.

Die Einleitwände 69 gemäß der fünften Ausführungsform der Organismenwanderanlage 1 können auch bei anderen, insbesondere der beschriebenen, Ausführungsformen der Organismenwanderanlage 1 vorgesehen sein und - vom flussaufwärtsgerichteten Ende des Schlitzes 5 in das Becken 3 hineinragen.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Organismenwanderanlage (1) zur Anordnung in einem fließenden Gewässer, wobei die Organismenwanderanlage (1) mit einer ersten Länge (81), ersten Breite (80) und ersten Höhe ausgebildet ist, wobei die Organismenwanderanlage (1) entlang der ersten Länge (81) wenigstens zwei Schlitzpässe (2) sowie wenigstens ein Becken (3) umfasst, wobei das Becken (3) zwischen jeweils zwei der wenigstens zwei Schlitzpässe (2) ausgebildet ist, und wobei jeder Schlitzpass (2) zum Durchfluss von Wasser in einer Schlitzdurchilussrichtung (4) wenigstens einen von der Organismenwanderanlage (1) umfassten Schlitz (5) ausbildet, wobei der Schlitz (5) eine - in Schlitzdurchflussrichtung (4) gemessene - Schlitzlänge (51) aufweist, welche Schlitzlänge (51) zwischen 20% und 80% der ersten Breite (80) beträgt, und dass der Schlitz (5) eine variierende Schlitzbreite (52) aufweist, **dadurch gekennzeichnet, dass** der Schlitz (5) durch eine erste Schlitzfläche (55) und eine der ersten Schlitzfläche (55) gegenüberliegende zweite Schlitzfläche (56) begrenzt ist, und dass erste Erhöhungen (61) der ersten Schlitzfläche (55) zweiten Erhöhungen (62) der zweiten Schlitzflächen (56) gegenüberliegen.

2. Organismenwanderanlage (1) nach Anspruch 1, **dadurch gekennzeichnet, dass** die Schlitzbreite (52) zwischen 5% und 45% der ersten Breite (80) variiert.

3. Organismenwanderanlage (1) nach 1 oder 2, **dadurch gekennzeichnet, dass** eine Schlitzmittelbreite (58) mindestens 50% einer Schlitzmaximalbreite (54) der variierenden Schlitzbreite (52) beträgt.

4. Organismenwanderanlage einem der Ansprüche 1 bis 3, **dadurch** gekennzeichnet, die Schlitzlänge (51) zwischen 0,4m und 2,5m beträgt.

5. Organismenwanderanlage einem der Ansprüche 1 bis 4, **dadurch gekennzeichnet**, **dass** die ersten Erhöhungen (61) und/oder zweiten Erhöhungen (62) rippenförmig, zinnenförmig, wellenförmig, keilförmig und/oder pyramidenstumpfförmig ausgebildet sind.

6. Organismenwanderanlage nach einem der Ansprüche 1 bis 5, dadurch gekenntzeichnet, **dass** - in Aufsicht auf die Organismenwanderanlage (1) gesehen - die Schlitzbreite (52) entlang der Schlitzlänge (51) zuerst mit einer flussoberlaufseitigen zweiten Breite, anschließend mit einer dritten Breite und schließlich mit einer wiederum flussunterlaufseitigen vierten Breite ausgebildet ist, und dass die dritte Breite größer als die zweite Breite und größer als die vierte Breite ausgebildet ist.

7. Organismenwanderanlage nach Anspruch 1 bis 6, **dadurch gekennzeichnet, dass** - in Aufsicht auf die Organismenwanderanlage (1) gesehen - der Schlitzpass (2) eine die Becken (3) trennende Beckentrennwand (25) und eine die Schlitzlänge (51) ausbildende Schlitzwand (26) umfasst, wobei die Beckentrennwand (25) und die Schlitzwand (26) wasserundurchlässig miteinander verbunden sind, und dass - in Aufsicht auf die Organismenwanderanlage (1) gesehen - die Schlitzwand (26) im Wesentlichen parallel zur Schlitzdurchflussrichtung (4) ausgebildet ist.

8. Organismenwanderanlage nach Anspruch 7, **dadurch gekennzeichnet**, **dass** - in Aufsicht auf die Organismenwanderanlage (1) gesehen - die Schlitzwand (26) des Schlitzpasses (2) im Wesentlichen lediglich schlitzdurchflussrichtungsaufwärts zur Beckentrennwand (25) desselben Schlitzpasses (2) angeordnet ist.

9. Organismenwanderanlage nach einem der Ansprüche 7 oder 8, dadurch **gekennzeichnet, dass** die Schlitzwand (26) im Wesentlichen parallel zur nächstliegenden Seitenwand (11) der Organismenwanderanlage (1) ausgebildet ist.

10. Organismenwanderanlage nach einem der Ansprüche 1 bis 9, dadurch **gekennzeichnet,** dass - in Aufsicht auf die Organismenwanderanlage (1) gesehen - das Becken (3) im Wesentlichen L-förmig ausgebildet ist, wobei das Becken (3) eine - in Richtung der ersten Länge (81) gemessene - variierende Beckenlänge und eine - in Richtung der ersten Breite (80) gemessene - variierende Beckenbreite aufweist.

11. Organismenwanderanlage nach einem der Ansprüche 1 bis 10, dadurch **gekennzeichnet,** dass - in Schlitzdurchflussrichtung (4) gesehen - wenigstens einem der Schlitzpässe (2) unmittelbar angrenzend ein Wassereinleitbereich (7) vorgeschaltet ist, und dass der Wassereinleitbereich (7) - ebenfalls in Schlitzdurchflussrichtung (4) gesehen - eine sich im Wesentlichen kontinuierlich verringernde Breite aufweist.

12. Organismenwanderanlage nach Anspruch 11. dadurch **gekennzeichnet, dass** der Wassereinleitbereich (7) wenigstens zu einer Seite hin durch eine Einleitwand (69) begrenzt ist.

13. Organismenwanderanlage nach einem der Ansprüche 1 bis 12, **dadurch gekennzeichnet, dass** die in der Organismenwanderanlage (1) ausgebildeten Schlitze (5) im Wesentlichen parallel zu einer Vertikalen (93) gerichtet sind.

## Claims

1. An organism migrant system (1) for arrangement in a flowing water body, wherein the organism migrant system (1) is formed with a first length (81), a first width (80) and a first height, wherein the organism migrant system (1) comprises at least two slot passes (2) and at least one pool (3) along the first length (81), wherein the pool (3) is formed between two each of the at least two slot passes (2), and wherein each slot pass (2) forms at least one slot (5) comprised by the organism migrant system (1) for the flow of water in a slot flow direction (4), wherein the slot (5) has a slot length (51) measured in the direction of the slot flow direction (4), which slot length (51) is between 20% and 80% of the first width (80), and the slot (5) has a varying slot width (52), **characterized in that** the slot (5) is bounded by a first slot area (55) and a second slot area (56) which is opposite of the first slot area (55), and first elevations (61) of the first slot area (55) are opposite of second elevations (62) of the second slot area (56).

2. An organism migrant system (1) according to claim 1, **characterized in that** the slot width (52) varies between 5% and 45% of the first width (80).

3. An organism migrant system (1) according to claim 1 or 2, **characterized in that** an average slot width (58) is at least 50% of a maximum slot width (54) of the varying slot width (52).

4. An organism migrant system according to one of the claims 1 to 3, **characterized in that** the slot length (51) is between 0.4 m and 2.5 m.

5. An organism migrant system according to one of the claims 1 to 4, **characterized in that** the first elevations (61) and/or the second elevations (62) are arranged in the form of ribs, crenellations, waves, wedges and/or a truncated pyramid.

6. An organism migrant system according to one of the claims 1 to 5, **characterized in that** when seen in a top view of the organism migrant system (1) the slot width (52) along the slot length (51) is formed at first by a second width on the side of the river headwater, subsequently by a third width and finally by a fourth width on the side of the underflow of the river, and the third width is formed to be greater than the second width and greater than the fourth width.

7. An organism migrant system according to one of the claims 1 to 6, **characterized in that** when seen in a top view of the organism migrant system (1) the slot pass (2) comprises a pool separating wall (25) separating the pools (3) and a slot wall (26) forming the slot length (51), wherein the pool separating wall (25) and the slot wall (26) are connected to each other in a water-impermeable manner, and when seen in a top view of the organism migrant system (1) the slot wall (26) is arranged substantially parallel to the slot flow direction (4).

8. An organism migrant system according to claim 7, **characterized in that** when seen in a top view of the organism migrant system (1) the slot wall (26) of the slot pass (2) is arranged substantially only upstream of the slot flow direction in relation to the pool separating wall (25) of the same slot pass (2).

9. An organism migrant system according to one of the claims 7 or 8, **characterized in that** the slot wall (26) is arranged substantially parallel to the nearest side wall (11) of the organism migrant system (1).

10. An organism migrant system according to one of the claims 1 to 3, **characterized in that** when seen in a top view of the organism migrant system (1) the pool (3) is arranged in a substantially L-shaped manner, wherein the pool (3) has a pool length which varies as measured in the direction of the first length (81) and a pool width which varies as measured in the direction of the first width (80).

11. An organism migrant system according to one of the claims 1 to 10, **characterised in that** when seen in the slot flow direction (4) at least one of the slot passes (2) is provided upstream with a water inlet region (7) in a directly adjacent manner, and the water inlet region (7) - also seen in the slot flow direction (4) - has a substantially continuously decreasing width.

12. An organism migrant system according to claim 11, **characterized in that** the water inlet region (7) is bounded on at least one side by an inlet wall (69).

13. An organism migrant system according to one of the claim 1 to 12, **characterized in that** the slots (5) formed in the organism migrant system (1) are directed substantially parallel to a vertical line (93).

## Revendications

1. Installation pour la migration d'organismes (1) destinée à être disposée dans un cours d'eau, laquelle installation pour la migration d'organismes (1) est conformée avec une première longueur (81), une première largeur (80) et une première hauteur, l'installation pour la migration d'organismes (1) comprenant le long de la première longueur (81) au moins deux fentes de passage (2) et au moins un bassin (3), le bassin (3) étant formé entre deux des au moins deux fentes de passage (2) et chaque fente de passage (2) formant pour l'écoulement d'eau dans un sens d'écoulement par la fente (4) au moins une fente (5) entourée par l'installation pour la migration d'organismes (1), la fente (5) présentant une longueur de fente (51), mesurée dans le sens d'écoulement par la fente (4), laquelle longueur de fente (51) mesure entre 20 % et 80 % de la première largeur (80), et la fente (5) présentant une largeur de fente variable (52), **caractérisée en ce que** la fente (5) est délimitée par une première surface de fente (55) et une deuxième surface de fente (56) faisant face à la première surface de fente (55), et **en ce que** des premières surélévations (61) de la première surface de fente (55) font face à des deuxièmes surélévations (62) de la deuxième surface de fente (56),

2. Installation pour la migration d'organismes (1) selon la revendication 1, **caractérisée en ce que** la largeur de fente (52) varie entre 5 % et 45 % de la première largeur (80).

3. Installation pour la migration d'organismes (1) selon la revendication 1 ou 2, **caractérisée en ce qu'**une largeur moyenne de fente (58) mesure au moins 50 % d'une largeur maximale de fente (54) de la largeur de fente variable (52).

4. Installation pour la migration d'organismes selon l'une des revendications 1 à 3, **caractérisée en ce que** la longueur de fente (51) mesure entre 0,4 m et 2,5 m.

5. Installation pour la migration d'organismes selon l'une des revendications 1 à 4, **caractérisée en ce que** les premières surélévations (61) et/ou les deuxièmes surélévations (62) sont conformées en forme de nervures, de créneaux, de coins et/ou de pyramides tronquées.

6. Installation pour la migration d'organismes selon l'une des revendications 1 à 5, **caractérisée en ce que**, en vue de dessus sur l'installation pour la migration d'organismes (1), la largeur de fente (52) est conformée le long de la longueur de fente (51) avec d'abord une deuxième largeur du côté d'amont, puis une troisième largeur et enfin avec une quatrième largeur du côté d'aval, et **en ce que** la troisième largeur est plus grande que la deuxième largeur et plus grande que la quatrième largeur.

7. Installation pour la migration d'organismes selon les revendications 1 à 6, **caractérisée en ce que**, en vue de dessus sur l'installation pour la migration d'organismes (1), le passage à fente (2) comprend une paroi de séparation de bassin (25) séparant le bassin (3) et une paroi fendue (26) formant la longueur de fente (51), la paroi de séparation de bassin (25) et la paroi fendue (26) étant reliées l'une à l'autre de manière étanche à l'eau, et **en ce que**, en vue de dessus sur l'installation pour la migration d'organismes (1), la paroi fendue (26) est sensiblement parallèle au sens d'écoulement par la fente (4).

8. Installation pour la migration d'organismes selon la revendication 7, **caractérisée en ce que**, en vue de dessus sur l'installation pour la migration d'organismes (1), la paroi fendue (26) du passage à fente (2) est pour l'essentiel simplement disposée en amont dans le sens d'écoulement par la fente par rapport à la paroi de séparation de bassin (25) du même passage à fente (2).

9. Installation pour la migration d'organismes selon l'une des revendications 7 ou 8, **caractérisée en ce que** la paroi fendue (26) est sensiblement parallèle à la paroi latérale (11) la plus proche de l'installation pour la migration d'organismes (1).

10. Installation pour la migration d'organismes selon l'une des revendications 1 à 9, **caractérisée en ce que**, en vue de dessus sur l'installation pour la migration d'organismes (1), le bassin (3) est sensiblement en forme de L, le bassin (3) présentant une longueur de bassin variable, mesurée dans le sens de la première longueur (81), et une largeur de bassin variable, mesurée dans le sens de la première largeur (80).

11. Installation pour la migration d'organismes selon l'une des revendications 1 à 10, **caractérisée en ce que**, vue dans le sens d'écoulement par la fente (4), une zone d'introduction d'eau (7) est montée immédiatement en amont et contiguë à au moins un des passages à fente (2) et **en ce que** la zone d'introduction d'eau (7) présente, vue également dans le sens d'écoulement par la fente (4), une largeur qui diminue de façon sensiblement continue.

12. Installation pour la migration d'organismes selon la revendication 11, **caractérisée en ce que** la zone d'introduction d'eau (7) est délimitée au moins sur un côté par une paroi d'introduction (69).

13. Installation pour la migration d'organismes selon l'une des revendications 1 à 12, **caractérisée en ce que** les fentes (5) formées dans l'installation pour la migration d'organismes (1) sont orientées de façon sensiblement parallèle à une verticale (93).
